# EUROPEAN PATENT SPECIFICATION

(11) **EP 3 883 869 B1**
(45) Date of publication and mention of the grant of the patent: **03.05.2023**
(21) Application number: 19824387.5
(22) Date of filing: 18.11.2019
(51) Int. Cl.: B65G 47/24, B65G 47/22, B65G 47/88, B65G 47/54

(54) **A STRAIGHTENING DEVICE FOR STRAIGHTENING A SLAB-SHAPED ARTICLE WITH RESPECT TO A MOVEMENT DIRECTION**
BEGRADIGUNGSVORRICHTUNG ZUM RICHTEN EINES PLATTENFÖRMIGEN GEGENSTANDES IN BEZUG AUF EINE BEWEGUNGSRICHTUNG
DISPOSITIF DE REDRESSEMENT PERMETTANT DE REDRESSER UN ARTICLE EN FORME DE PLAQUE PAR RAPPORT À UNE DIRECTION DE MOUVEMENT

(30) Priority: 20.11.2018 IT 201800010440
(43) Date of publication of application: 29.09.2021
(73) Proprietor: SACMI TECH S.P.A., 40026 Imola (BO) (IT)
(72) Inventor: BARDI, Maurizio, 41043 Formigine (MO) (IT)
(74) Representative: Dall'Olio, Christian
(86) International application number: PCT/IB2019/059866
(87) International publication number: WO 2020/104909

(56) References cited:
- EP-A1- 1 566 365
- FR-A1- 2 560 115
- US-A- 5 050 857

## Description

### FIELD OF THE INVENTION

The present invention relates to the technical sector concerning transport and movement of slab-shaped articles, such as in particular unfired tiles, for example unfired tiles having large dimensions.

### DESCRIPTION OF THE PRIOR ART

The unfired tiles in outfeed from the forming press are transported towards the firing kiln by conveying means, for example constituted by roller planes (i.e. an assembly of parallel motorised rollers), which include a transport and movement pathway of the tiles that is quite long and can include changes of direction.

Before being fed into the kiln, the unfired tiles can very often be the object of special work operations, such as for example grinding the edges thereof or, for example, the application of decorations on the surface thereof.

These work operations are carried out by special machinery which are arranged along the transport pathway of the tiles.

During the transport thereof, also as a consequence of the changes of direction, not all the tiles maintain a correct alignment with respect to the movement direction thereof, i.e. not all the tiles stay with the axis of symmetry thereof parallel to the movement direction. This circumstance without doubt constitutes a drawback, as the unfired tiles might arrive at the above-mentioned machinery (for grinding or decoration) orientated incorrectly and thus causing a problem as regards the work operations to be carried out.

Straightening devices are known for straightening unfired tiles, which comprise a conveyor means, for example constituted by a plurality of belts loop-closed and arranged parallel to one another, and a barrier, positioned at an end of the conveyor means, constituted by a wall arranged transversal and perpendicular to the activating direction of the conveyor means (i.e. of the belts).

The conveyor means is arranged along the transport and movement pathway of the tiles so as to receive the tiles in a movement direction with respect to which the tile is not correctly orientated, as a relative axis is no longer parallel to the movement direction.

The conveyor means is activated in the same movement direction as the tiles, and, once received, the tile which must be straightened is conveyed up to abutment against the wall of the barrier.

The tile will abut the wall of the barrier first with a portion close to a relative corner of the transversal side to the movement direction, and, due to the pushing action of the conveyor means, will tend to abut against the wall with the whole transversal side, being arranged with the axis thereof parallel to the movement direction of the conveyor means.

A device of this type, however, has a drawback.

The unfired tiles, which are constituted by pressed powders, when impacting against the barrier wall, with a portion of the transversal side thereof closed to the corner, are subject to impacts which might cause breakage, for example portions of tile close to the corner can detach or crumble, or there might appear cracks or be splintering.

A further straightening device of known type also comprises a conveyor means, for example constituted by a plurality of belts loop-closed and arranged parallel to one another, and comprising a barrier, positioned at the end of the conveyor means, constituted by a plurality of cylindrical wheels mounted on relative vertical axes of rotation. The cylindrical wheels, arranged in this way, have the cylindrical lateral surface thereof exposed to the movement direction of the tile to be straightened and will therefore go into contact with the transversal side of the tile tangentially. The tile conveyed by the conveyor means towards the wheels will therefore have a series of contact lines with the wheels in the tangential points between the relative transversal side to the movement direction and the lateral surfaces of the wheels. This other type of straightening device of the prior art also has a drawback.

In fact, at the contact lines between the transversal side of the tile, which is transported by the conveyor means against the wheels, and the lateral surface of the wheels, there can be an onset of significant stresses which can cause an abrasion of the tile.

Document FR 2.560.115 discloses a device according to the preamble of claim 1 for positioning a tyre at a work station by aligning the axis of the tyre with the longitudinal axis of a conveyor.

### SUMMARY OF THE INVENTION

The aim of the present invention is therefore to provide a novel straightening device for straightening a slab-shaped article, in particular an unfired tile, with respect to a movement direction able to obviate the above-mentioned drawbacks present in the devices of known type as described in the foregoing.

In particular, the aim of the present invention is to provide a novel straightening device for straightening of an unfired tile, with respect to a movement direction able to obviate the above-mentioned drawbacks present in the devices of known type as described in the foregoing.

The above-cited aims are obtained by a straightening device according to claim 1. Further characteristics and advantageous aspects of the straightening device of the present invention are set down in the various dependent claims.

### BRIEF DESCRIPTION OF THE DRAWINGS

The characteristics of a preferred, but not exclusive, embodiment of the straightening device of the present invention will be described in the following description with reference to the appended tables of drawings, in which:
- figure 1 schematically illustrates a perspective view of the straightening device;
- figure 2 illustrates, in a plan view from above, the straightening device with a tile to be straightened positioned thereon;
- figures 3A and 3B illustrate, in relative plan views from above, the steps of straightening the tile;
- figure 4 illustrates detail K of figure 3B in larger scale;
- figure 5A illustrates detail M of figure 2;
- figure 5B illustrates detail N of figure 3A;
- figure 6A is a schematic perspective view of significant components of the straightening device, according to a second possible embodiment;
- figure 6B illustrates, in a schematic perspective view, the components of figure 6A according to a further possible embodiment thereof;
- figure 6C illustrates, in a schematic perspective view, the components of figure 6A according to a further possible embodiment thereof;
- figure 6D is a plan view from above of figure 6C;
- figure 7A is a schematic perspective view of the straightening device of the invention, according to a possible embodiment thereof, associated to a conveyor means of a transport line of unfired tiles (not illustrated in its entirety), in which the conveyor means is transporting, in an advancement direction, a tile to be straightened;
- figures from 7B to 7F illustrate, in respective schematic perspective views, a possible sequence of straightening the tile by means of the straightening device of the invention.

### DESCRIPTION OF THE PREFERRED EMBODIMENTS

With reference to the accompanying tables of drawings, reference letter (D) denotes the straightening device for straightening a slab-shaped article (P) with respect to a movement direction, object of the invention, in its entirety.

As indicated in the foregoing, the straightening device (D) of the invention is especially applicable in the ceramic sector, to be used for straightening unfired tiles, for example of medium and large dimensions, with respect to a movement direction thereof along a transport pathway, so that the unfired tiles, once straightened, have an axis of symmetry that is parallel to the movement direction along which they must be moved in order to be subjected to special work operations (for example, grinding or decoration) or to be inserted in the firing kiln. The straightening device (D) comprises, in known ways, a conveyor means (1) and an abutting barrier (2).

The abutting barrier (2) can preferably be positioned in proximity of an end of the conveyor means (1).

The conveyor means (1) is predisposed and configured to receive a slab-shaped article (P) which, as previously mentioned, can be an unfired tile and, in the case in which the slab-shaped article (P) is to be straightened (i.e. correctly orientated), to move the sheet-shaped article (P) along a movement direction (T) towards the abutting barrier (2).

The conveyor means (1) conveys the slab-shaped article (P) against the abutting barrier (2) with the purpose of straightening the sheet-shaped article (P) with respect to the movement direction (T), i.e. to orientate the slab-shaped article (P) so that a relative axis of symmetry is parallel to the movement direction (T).

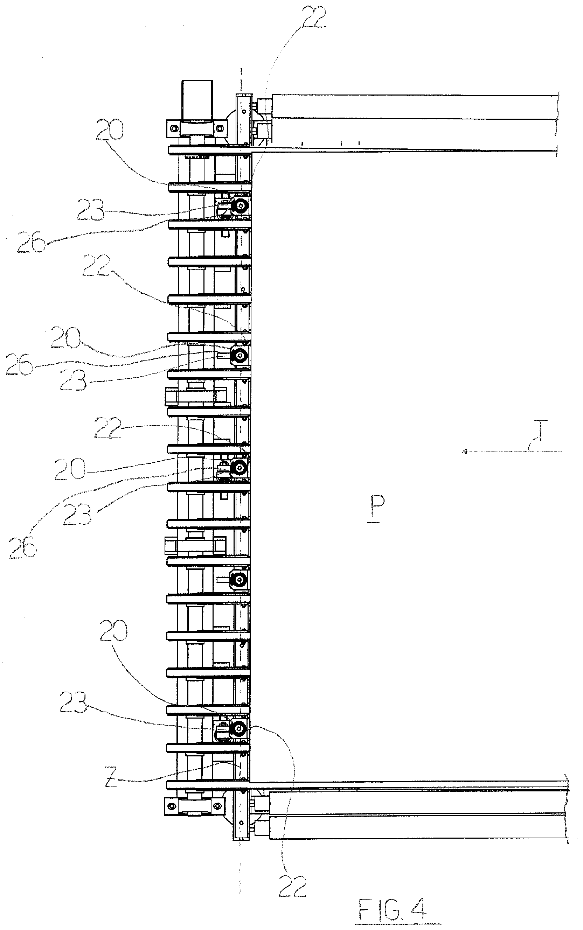

The novel and special characteristics of the straightening device (D) consist in the fact that:
the abutting barrier (2) is constituted by a plurality of abutting elements (20) each of which is conformed so that the relative lateral surface (21) has at least a flat portion (22);
the abutting elements (20) are mounted rotatably idle on relative vertical rotation axes (23) which are arranged aligned along a transversal and perpendicular direction (Z) to the movement direction (T) (see figure 4);
the abutting elements (20) are mounted on the rotation axes (23) in such a way that the flat portion (22) of the lateral surface (21) thereof is substantially transversal to the movement direction (T), and facing towards the slab-shaped article (P) which is moved by the conveyor means (1) towards the abutting barrier (2), so that the abutting elements (20) abut a transversal side of the slab-shaped article (P) only with the flat portions (22) of the lateral surfaces (21) thereof.

Owing to the combination of these particular characteristics, the straightening device (D) of the invention is able to effectively straighten a slab-shaped article (P), such as an unfired tile, i.e. position the tile correctly with respect to a movement direction, and at the same time guarantee that the unfired tile does not suffer any damage or abrasion at the relative transversal side with which it abuts the abutting elements (20) of the abutting barrier (2).

In fact, owing to the special conformation of the abutting barrier (2), constituted as mentioned by a plurality of abutting elements (2), mounted idle on relative vertical rotation axes (23) and having a flat portion (22) on the relative lateral surface (21), the parts of the transversal side of the tile in proximity of a more advanced corner, which is moved by the conveyor means (1) along the movement direction (T) towards the abutting barrier (2), will encounter single abutting elements (20) on with corresponding flat portions.

Thus, the abutting elements (20) will be able to rotate about the relative rotation axes (23), becoming arranged with the relative flat portions (22) transversal and perpendicular to the movement direction (T) of the tile (P) thus enabling the tile (P), still pushed by the conveyor means (1), to rotate on the conveyor means (1) so that it can also abut, with further flat portions of the relative transversal side, the flat portions (22) of the remaining other abutting elements (20), and be arranged, with the relative transversal side perpendicular to the movement direction (T), and thus with the relative axis of symmetry parallel to the movement direction (T). During these operations, the tile will not be subject to relevant stresses since the contact with the abutting elements takes place with flat portions of the relative transversal side that come into contact with the flat portions of the lateral surfaces of the abutting elements, and the stresses will therefore be much lower than with the devices of known type described in the foregoing.

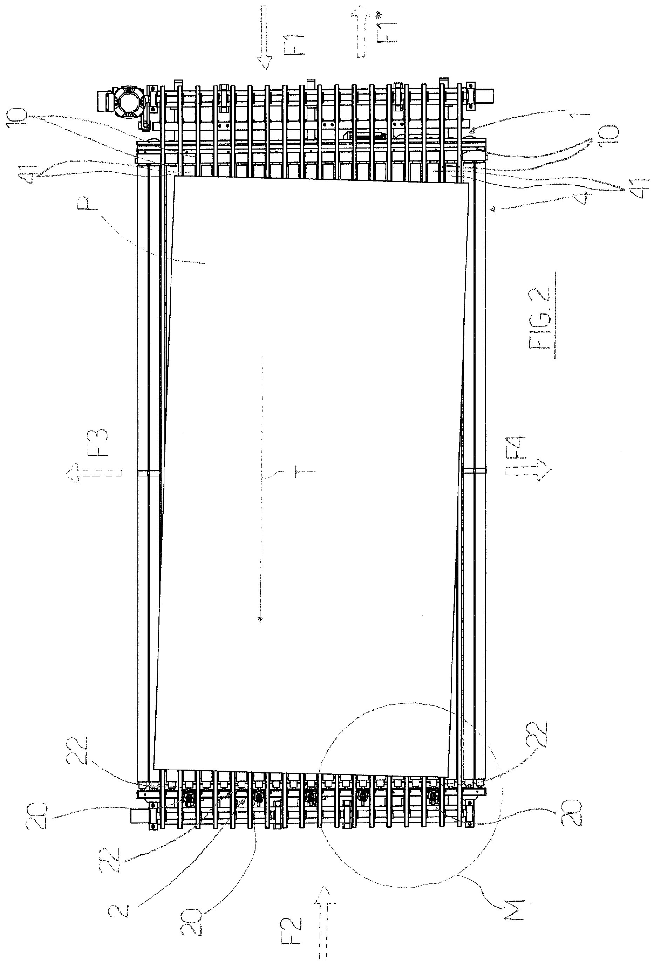

Figure 2 illustrates the straightening device (D) while the conveyor means (1) is moving an unfired tile (P) to be straightened along a movement direction (T) towards the abutting elements (20) of the abutting barrier (2). For example, the conveyor means (1) has received an unfired tile (P) from a conveyor arranged upstream, and schematically represented by the arrow (F1).

The unfired tile (P) is not correctly orientated as an axis of symmetry thereof (for example the longitudinal axis) is not parallel to the movement direction (T) of the conveyor means (1) (or to the transport direction of the conveyor arranged upstream indicated by the arrow (F1)).

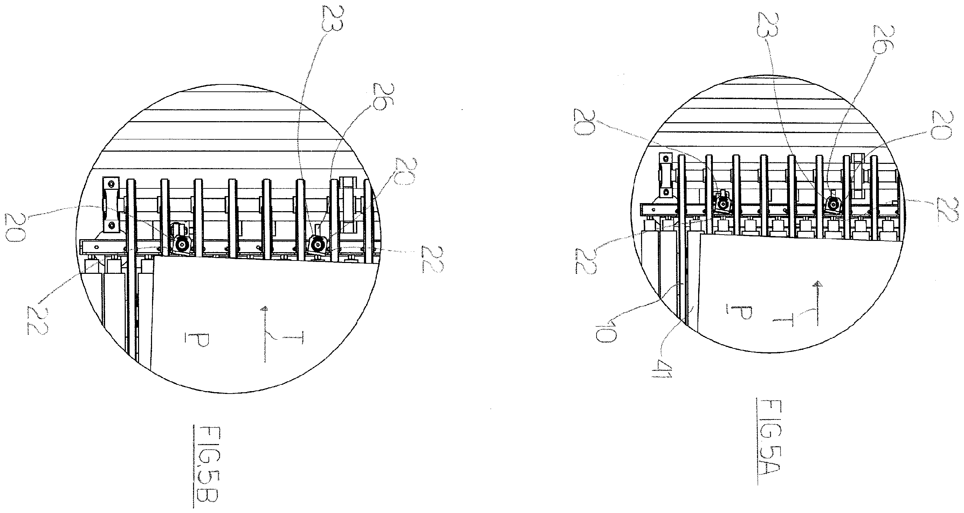

The tile (P) will thus have a corner of the transversal side facing towards the abutting barrier (2) which is in a more advanced position with respect to the other corner (see also for example the larger scale detail of figure 5A).

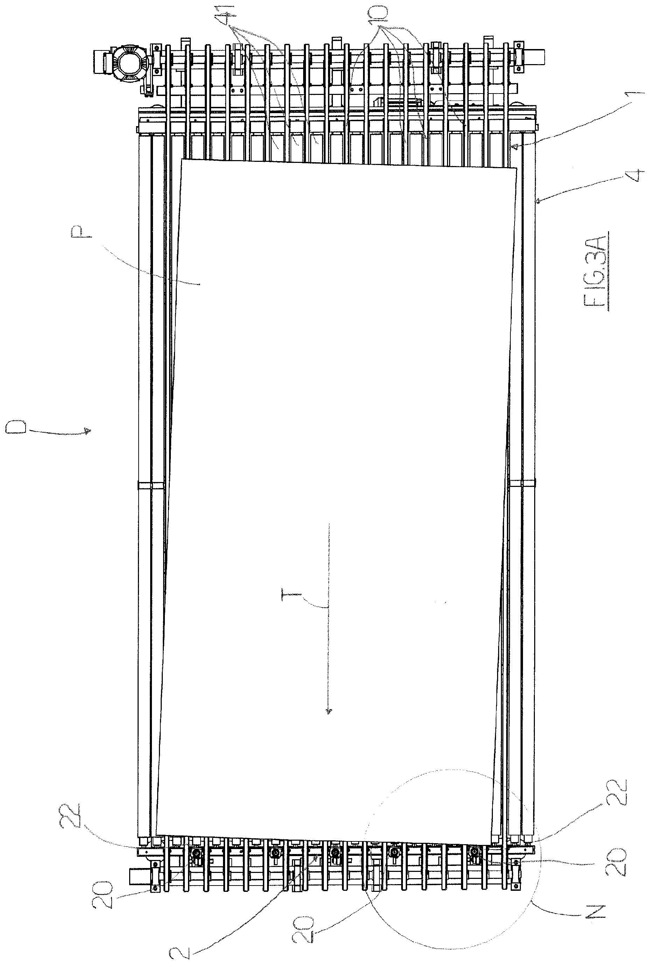

Figure 3A illustrates the instant when parts of the transversal side of the tile (P) in proximity of the advanced corner encounter a first abutting element (20) of the abutting elements (20) of the abutting barrier (2) at the flat portion (22) of the relative lateral surface (21) (in this regard see also the larger scale detail of figure 5B).

The push exerted by the conveyor means (1), which continues to push the tile (P) towards the abutting elements (20) in the movement direction (T), is such that the first abutting element (20) rotates about the relative axis of rotation (23), and becomes arranged in such a way that the flat portion (22) of the relative lateral surface (21) is arranged transversally and perpendicular to the movement direction (T), so that a corresponding flat portion of the transversal side of the tile completely abuts the flat portion (22) of the first abutting element (20), which thus constitutes a constraint to the advancement of the tile.

The continuative actuation of the conveyor means (1) will be such that the tile (P) will be constrained to rotate and therefore abut, with respective flat portions of the relative transversal side, all the remaining other abutting elements (20) at the flat portions (22) of the lateral surfaces (21) thereof.

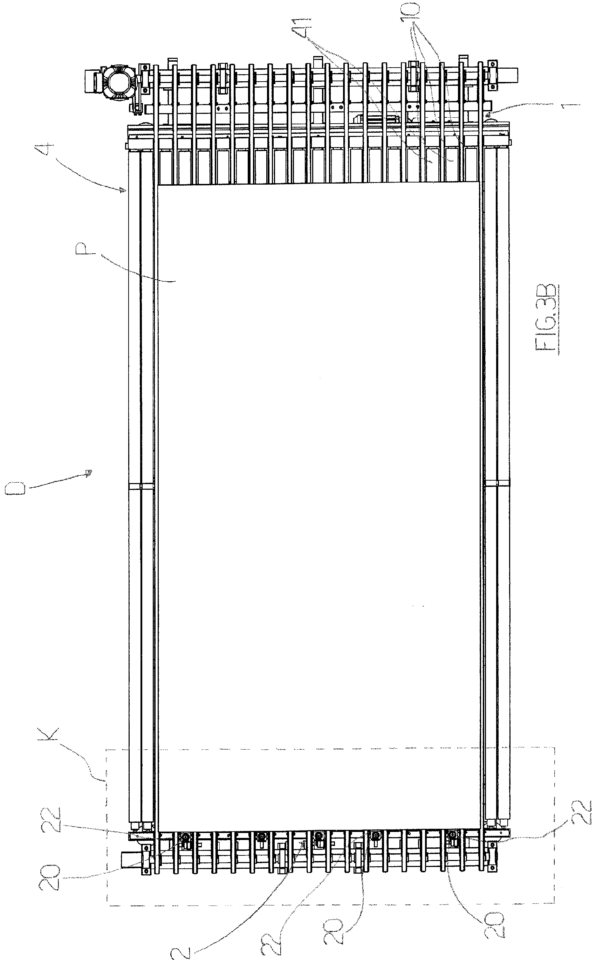

The tile (P) will thus be arranged, with the relative transversal side perpendicular to the movement direction (T), and will thus become positioned with a correct orientation with respect to the movement direction (T), i.e. with a relative axis of symmetry is parallel to the movement direction (T) (see for example figure 3B and the larger detail of figure 4).

Further advantageous characteristics of the straightening device (D) of the invention are described in the following.

In an advantageous aspect, the abutting elements (20) are mounted on relative rotation axes (23) in such a way as to be movable between a lowered non-operating position, wherein they are arranged lowered with respect to the conveyor means (1), and a raised operating position, in which they are raised with respect to the conveyor means (1) so as be able to abut, with the flat portion (22) of the relative lateral surface (21), a transversal side of a slab-shaped article (P) moved by the conveyor means (1) along the movement direction (T) towards the abutting barrier (2).

For example, the vertical axes (23) of the abutting elements (20) can be mounted on relative support arms (26) which are connected to a plate (not visible in the drawings) arranged transversally beneath the conveyor means (1) and vertically movable between a lowered position and a raised position, in such a way as to position the abutting elements (20) respectively in the lowered non-operating position and in the raised operating position.

In this way, when the abutting elements (20) are positioned in the lowered non-operating position thereof, the conveyor means (1) can also receive a slab-shaped article (P) (unfired tile) to be straightened from another conveyor, opposite the one indicated in the foregoing with the arrow (F1) in figure 2, and schematically illustrated, also in figure 2, by the dashed arrow (F2).

In a further preferred aspect, the straightening device (D) can be configured in such a way as to comprise, for each for each of the abutting elements (20) of the abutting barrier (2), rotation limiting means (3) predisposed and configured to limit the angular rotation of the abutting element (20) with respect to the respective rotation axis (23).

As the abutting elements (20) are mounted idle on the rotation axes (23), the presence of the rotation limiting means (3) ensures that the abutting elements (20) are positioned so that the flat portions (22) of the relative lateral surfaces (21) are always substantially facing towards the slab-shaped article (P) which is moved by the conveyor means (1) towards the abutting barrier (2) and substantially transversal, though with a slight inclination, with respect to the movement direction (T) of the slab-shaped article (P).

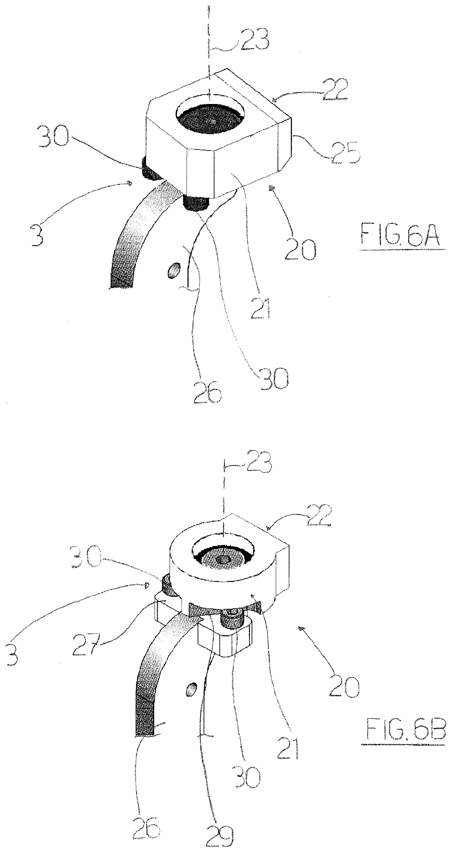

In a first possible embodiment, the rotation limiting means (3) can comprise cylindrical blocks (30) mounted below the abutting elements (20), bilaterally with respect to the relative support arm (26) (see figure 6A). In this way, the angular rotation of the abutting element (20) is limited by the abutment of the cylindrical blocks (30) against the support arm (26).

In another possible embodiment, the cylindrical blocks (30) can be mounted directly on the support arms (26) of the abutting elements (20) by means of a relative small plate (27), bilaterally with respect to the rotation axes (23), while the abutting elements (20) inferiorly have relative profiled gullies (29) to abut the cylindrical blocks (30) (see figure 6B).

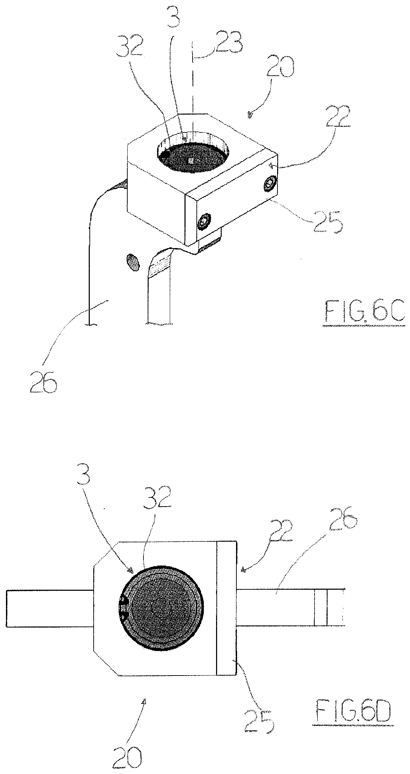

Further, the rotation limiting means (3) can comprise torsion springs (32) which are mounted on the abutting elements (20) coaxially to the relative rotation axes (23) (see for example figures 6C and 6D).

The presence of the torsion springs (32) predisposed coaxially on the abutting elements (20) advantageously enables, while waiting for the arrival of a tile to be straightened, keeping the abutting elements (20) in a determined position in which the flat portions (22) of the relative lateral surfaces (21) are always facing towards the conveyor means (1) and substantially transversal, though with a slight inclination, with respect to the movement direction (T) of the tile (P) towards the abutting barrier (2).

In a further advantageous aspect, each abutting element (20) of the abutting barrier (2) comprises a cladding layer (25), made of a material having impact-absorbent characteristics, positioned at the flat portion (22) of the relative lateral surface (21).

In a further particularly preferred aspect, the straightening device (D) is configured and realised so as also to comprise a second conveyor means (4), associated to the conveyor means (1), predisposed and configured so as to be vertically movable with respect to the conveyor means (1) and so as to be positioned in a first non-operating configuration, wherein it is lowered with respect to the conveyor means (1) so that the conveyor means (1) can move the slab-shaped article (P) along the movement direction (T), and in a second operating configuration wherein it is raised with respect to the conveyor means (1) so that the second conveyor means (4) can move the slab-shaped article (P).

In particular, the second conveyor means (4) is configured, when positioned in the second operating configuration, to move the slab-shaped article (P) in a second movement direction (V) perpendicular to the movement direction (T).

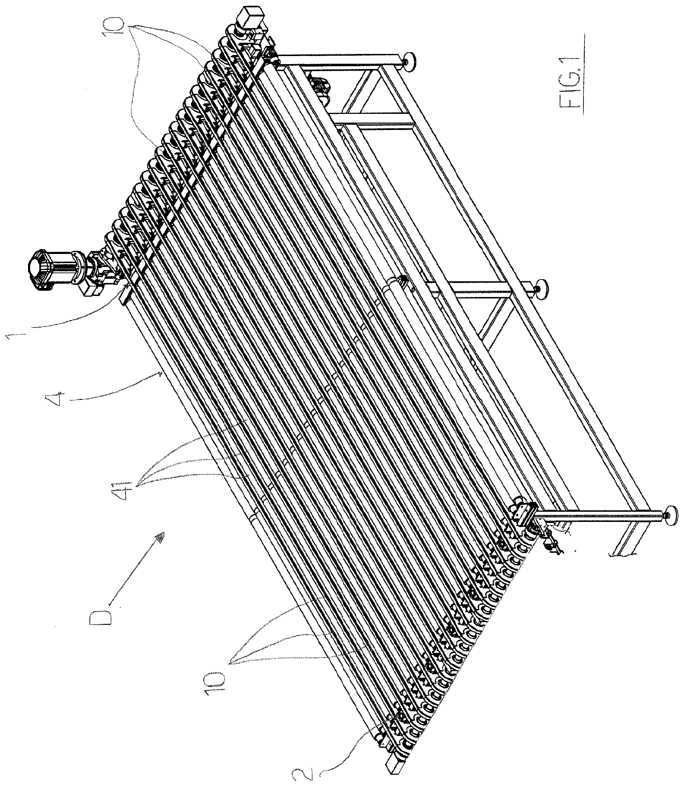

For example, according to the preferred embodiment illustrated in the accompanying figures, the straightening device (D) is configured and made in such a way that the conveyor means (1) comprises a plurality of belts (10) loop-closed and arranged parallel to one another and reciprocally distanced, while the second conveyor means (4) comprises a plurality of motorised rollers (41), arranged in the spaces existing between the belts (10) of the plurality of belts (10) with the relative rotation axes parallel to one another and parallel to the belts (10), i.e. parallel to the movement direction (T) (see for example figure 1).

With this particular structure, the straightening device (D) can receive unfired tiles (P) to be straightened by relative conveyors arranged upstream or downstream with respect to the conveyor means (1) (i.e. at the two ends of the conveyor means (1)), as illustrated by the arrow (F1) and by the dashed arrow (F2) of figure 2.

In these cases, the second conveyor means (4) (the motorised rollers) is put into the first non-operating configuration (rollers lowered with respect to the belts) so that the unfired tile can be received by the conveyor means (1) (by the belts).

In order to receive the unfired tiles from a conveyor arranged at the end of the conveyor means (1) in which the abutting barrier (2) is predisposed (dashed arrow (F2) in figure 2), the abutting elements (20) of the abutting barrier (2) must be positioned in the relative lowered non-operating positions, then to be taken into the raised operating positions in order to enable the straightening operations to take place.

Having completed the straightening operations of the unfired tile (P) according to the ways described in the foregoing, the straightening device (D), once the second conveyor (4) (the rollers) has been brought into the second operating configuration, can move the straightened unfired tile in a movement direction that is perpendicular to the movement direction (T) used for the straightening operations, either in a first movement sense (F3) or in a second movement sense (F4), opposite one another, denoted with relative dashed arrows in figure 2 (activating the motorised rollers in a first rotation sense or in a second rotation sense opposite the first).

Possibly, once the unfired tile (P) has been straightened, the straightening device, while keeping the second conveyor (4) in the first non-operating configuration, can move the straightened unfired tile, on the conveyor means (1) (the belts) along the movement direction (T) but in the sense of the dashed arrow (F1 *) of figure 2 (opposite the movement direction of the slab-shaped article against the abutting barrier during the straightening operations).

In this way, the straightened unfired tile can be moved in outfeed from the straightening device (D) in three possible transport directions (two perpendicular, and one concordant) in relation to the movement direction (T) used for the straightening operations, and thus the straightened unfired tile, correctly orientated with respect to these three transport directions, can be transported to appropriate machinery for the carrying-out of the grinding or decoration operations, or transported up to the firing kiln.

Possibly, in another possible embodiment, not illustrated, the straightening device (D) can be configured and made specularly, i.e. with the conveyor means (1) (which must carry out the movement of the slab-shaped article/unfired tile to be straightened against the abutting barrier) comprising a plurality of motorised rollers, arranged with the relative rotation axes parallel to one another and arranged reciprocally distanced, and with the second conveyor means comprising a plurality of loop-wound belts arranged in the spaces between the plurality of rollers and parallel to the rotation axes of the rollers.

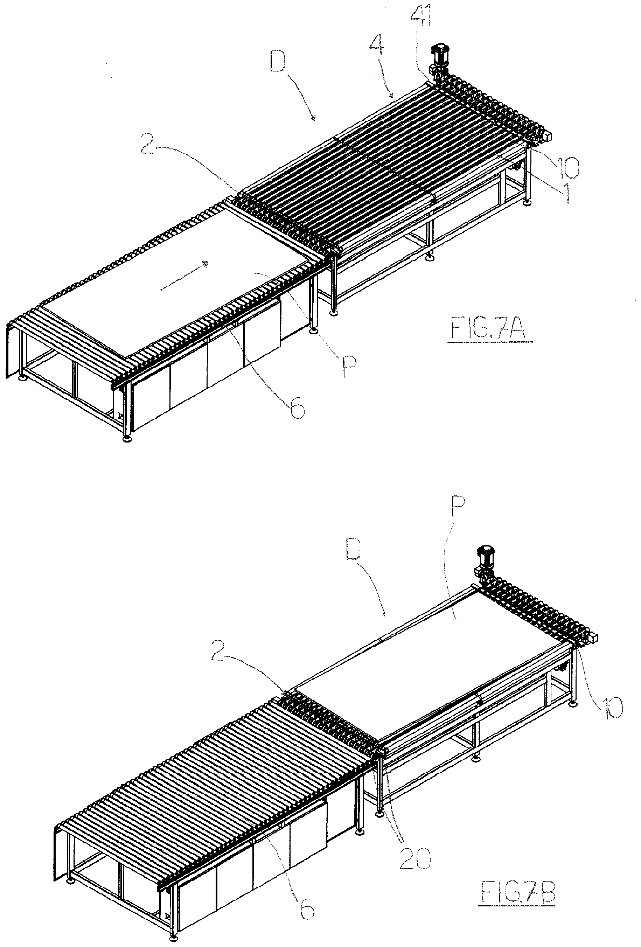

Figure 7A illustrates a possible arrangement of the straightening device (D) of the invention, comprising the conveyor means (1) constituted by the plurality of looped belts (10) and the second conveyor means (4) constituted by the plurality of motorised rollers (41), which is arranged downstream of a roller conveyor (6) of a transport line (not illustrated in its entirety) of unfired tiles (P) coming from a forming press and which must be straightened before being transported to special machinery for carrying out work operations (for example grinding or decoration) or up to the firing kiln.

In the arrangement illustrated in figure 7A, the straightening device (D) is arranged so that the abutting barrier (2), situated in proximity of a first end thereof, is facing the roller conveyor (6).

In order to receive the unfired tile (P) to be straightened on the belts (10) of the conveyor means (1), the abutting elements (20) of the abutting barrier (2) must be positioned in the relative lowered non-operating position and the motorised rollers (41) into the lowered non-operating configuration thereof with respect to the belts (10).

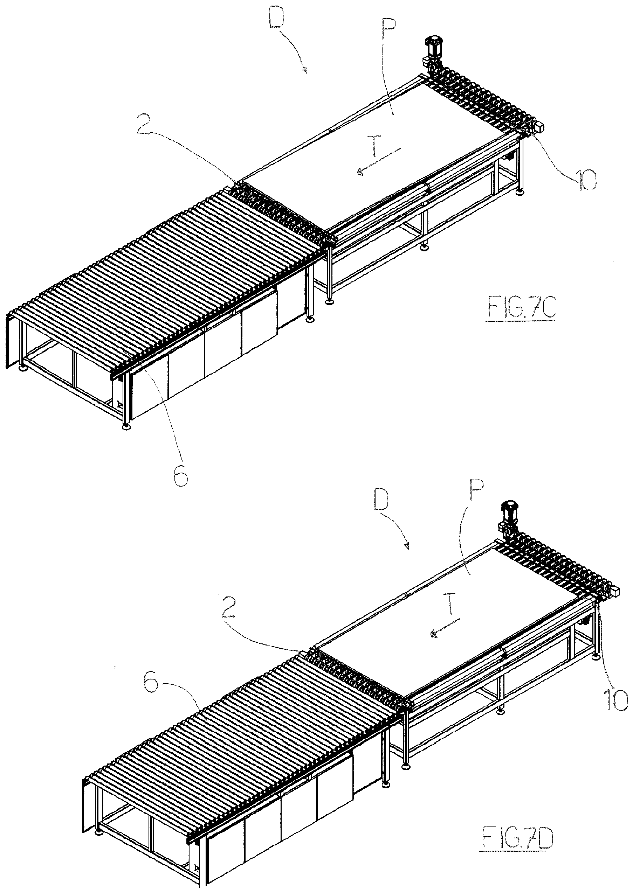

Once the unfired tile (P) has been received on the belts (10) of the conveyor means (1) (figure 7B), the abutting elements (20) are brought into the raised operating position and the belts (10) are activated in the movement direction (T) to move the unfired tile (P) towards the abutting barrier (2) (figure 7C).

The activating of the belts (10) continues until the unfired tile (P) is completely straightened, i.e. arranged with the relative transversal side perfectly in abutment against all the flat portions of the lateral surfaces of the abutting elements of the abutting barrier (2) and perpendicular to the movement direction (T), i.e. with the relative longitudinal axis of symmetry parallel to the movement direction (T) (figure 7D).

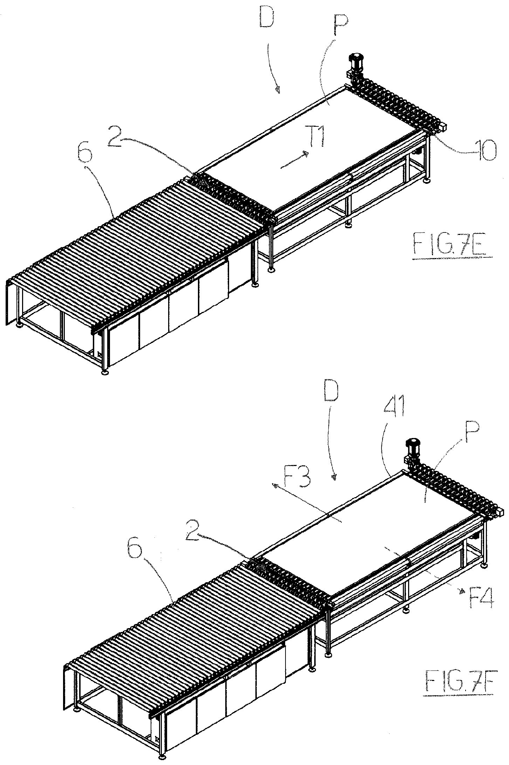

At this point, the belts (10) are activated in the opposite direction (sense T1) to slightly distance the unfired tile (P) thus straightened by the abutting barrier (2), and are then halted (figure 7E).

Then the motorised rollers (41) are brought into the raised operating configuration with respect to the belts (10) so as to raise the unfired tile (P) straightened by the belts (10), keeping the tile resting thereon.

Subsequently the rollers (41) can be activated in a first rotation sense, causing outfeed of the unfired tile (P) straightened by the straightening device (D) in a first transport sense (F3) (see the continuous arrow in figure 7F) perpendicular to the preceding movement direction (T) used for straightening it, and moving it towards a further conveyor (not illustrated) of the transport line of the tiles, which will transport the straightened unfired tile towards machinery for carrying out work operations, such as for example decoration or grinding, or towards the firing kiln. Alternatively the motorised rollers (41) can be activated in a second rotation sense, opposite the first, causing the unfired tile (P) straightened by the straightening device (D) to outfeed in a second transport sense (F4) (see the dashed arrow in figure 7F) perpendicular to the preceding movement direction (T) used for straightening it, and moving it towards another further conveyor (not illustrated) of the transport line of the tiles, which will transport the straightened unfired tile towards machinery for carrying out the work operations, such as for example decoration or grinding, or towards the firing kiln.

The arrangement illustrated in figures from 7A to 7F is only one of the numerous and varied possible arrangements of the straightening device (D) with respect to roller conveyors of a transport line of unfired tiles. The straightening device (D), as previously evidenced with reference to figure 2, can be used to receive unfired tiles to be straightened on one side or the other of the belts (10), i.e. on one side or the other of the conveyor means (1), and, once the tile has been straightened, the straightening device (D) can make the tile exit from one of the two sides of the belts, or, by means of the motorised rollers of the second conveyor once raised with respect to the belts, in two different transport senses, perpendicular to the belts.

## Claims

1. A straightening device (D) for straightening a slab-shaped article (P), in particular an unfired tile, with respect to a movement direction (T), comprising:
a conveyor means (1);
an abutting barrier (2);
wherein the conveyor means (1) is predisposed and configured to receive a slab-shaped article (P) and to move the slab-shaped article (P) along a movement direction (T) towards the abutting barrier (2),
wherein the abutting barrier (2) is constituted by a plurality of abutting elements (20) each of which is conformed so that the relative lateral surface (21) has at least a flat portion (22),
wherein the abutting elements (20) are mounted rotatably idle on relative vertical rotation axes (23) which are arranged aligned along a transversal and perpendicular direction (Z) to the movement direction (T),
**characterised in that**
the abutting elements (20) are mounted on the rotation axes (23) in such a way that the flat portion (22) of the lateral surface (21) thereof is substantially transversal to the movement direction (T), and facing towards the slab-shaped article (P) which is moved by the conveyor means (1) towards the abutting barrier (2), so that the abutting elements (20) abut a transversal side of the slab-shaped article (P) only with the flat portions (22) of the lateral surfaces (21) thereof.

2. The straightening device (D) of claim 1, wherein the plurality of abutting elements (20) of the abutting barrier (2) are positioned in proximity of an end of the conveyor means (1).

3. The straightening device (D) of any one of the preceding claims, wherein the abutting elements (20) are mounted on relative rotation axes (23) in such a way as to be movable between a lowered non-operating position, wherein they are arranged lowered with respect to the conveyor means (1), and a raised operating position, wherein they are raised with respect to the conveyor means (1) so as be able to abut, with the flat portion (22) of the relative lateral surface (21), a transversal side of a slab-shaped article (P) moved by the conveyor means (1) along the movement direction (T) towards the abutting barrier (2).

4. The straightening device (D) of any one of the preceding claims, comprising, for each of the abutting elements (20) of the abutting barrier (2), rotation limiting means (3) predisposed and configured to limit the angular rotation of the abutting element (20) with respect to the respective rotation axis (23).

5. The straightening device (D) of claim 4, wherein the rotation limiting means (3) comprise torsion springs (32) which are mounted on the abutting elements (20) coaxially to the relative rotation axes (23) so as to maintain, while awaiting arrival of a slab-shaped article (P), the abutting elements (20) in a determined position in which the flat portions (22) of the relative lateral surfaces (21) are facing towards the conveyor means (1) with an inclination with respect to the movement direction (T) of the slab-shaped article (P) towards the abutting barrier (2).

6. The straightening device (D) of any one of the preceding claims, wherein each abutting element (20) of the abutting barrier (2) comprises a cladding layer (25), made of a material having impact-absorbent characteristics, positioned at the flat portion (22) of the relative lateral surface (21).

7. The straightening device (D) of any one of the preceding claims, comprising a second conveyor means (4), associated to the conveyor means (1), predisposed and configured so as to be vertically movable with respect to the conveyor means (1) and so as to be positioned in a first non-operating configuration, in which it is lowered with respect to the conveyor means (1) so that the conveyor means (1) can move the slab-shaped article (P) along the movement direction (T), and in a second operating configuration wherein it is raised with respect to the conveyor means (1) so that the second conveyor means (4) can move the slab-shaped article (P), and wherein the second conveyor means (4) is configured, when positioned in the second operating configuration, to move the slab-shaped article (P) in a second movement direction (V) perpendicular to the movement direction (T).

8. The straightening device of claim 7, wherein the conveyor means (1) comprises a plurality of belts (10) loop-closed and arranged parallel to one another and reciprocally distanced, and wherein the second conveyor means (4) comprises a plurality of motorised rollers (41), arranged in the spaces existing between the belts (10) of the plurality of belts (10) with the relative rotation axes parallel to one another and parallel to the belts (10), i.e. parallel to the movement direction (T).

## Patentansprüche

1. Begradigungsvorrichtung (D) zum Richten eines plattenförmigen Gegenstandes (P), insbesondere einer ungebrannten Fliese, in Bezug auf eine Bewegungsrichtung (T), umfassend:
eine Fördereinrichtung (1);
eine Anschlagbarriere (2);
wobei die Fördereinrichtung (1) dafür vorgesehen und ausgelegt ist, einen plattenförmigen Gegenstand (P) aufzunehmen und den plattenförmigen Gegenstand (P) entlang einer Bewegungsrichtung (T) zur Anschlagbarriere (2) hin zu bewegen,
wobei die Anschlagbarriere (2) aus einer Vielzahl von Anschlagelementen (20) besteht, von denen jedes derart beschaffen ist, dass die relative seitliche Oberfläche (21) zumindest einen flachen Abschnitt (22) aufweist,
wobei die Anschlagelemente (20) drehbar leerlaufend auf entsprechenden vertikalen Drehachsen (23) montiert sind, die entlang einer zu der Bewegungsrichtung (T) quergerichteten und orthogonalen Richtung (Z) ausgerichtet angeordnet sind,
**dadurch gekennzeichnet, dass** die Anschlagelemente (20) derart auf den Drehachsen (23) montiert sind, dass der flache Abschnitt (22) ihrer seitlichen Oberfläche (21) im Wesentlichen quergerichtet zu der Bewegungsrichtung (T) verläuft und dem plattenförmigen Gegenstand (P) zugewandt ist, der von der Fördereinrichtung (1) zur Anschlagbarriere (2) hin bewegt wird, so dass die Anschlagelemente (20) nur mit den flachen Abschnitten (22) ihrer seitlichen Oberflächen (21) gegen eine Querseite des plattenförmigen Gegenstandes (P) anliegen.

2. Begradigungsvorrichtung (D) nach Anspruch 1, wobei die Vielzahl von Anschlagelementen (20) der Anschlagbarriere (2) in der Nähe eines Endes der Fördereinrichtung (1) angeordnet sind.

3. Begradigungsvorrichtung (D) nach einem der vorhergehenden Ansprüche, wobei die Anschlagelemente (20) derart auf entsprechenden Drehachsen (23) montiert sind, dass sie bewegbar sind zwischen einer abgesenkten Außerbetriebsstellung, in der sie in Bezug auf die Fördereinrichtung (1) abgesenkt angeordnet sind, und einer angehobenen Betriebsstellung, in der sie in Bezug auf die Fördereinrichtung (1) angehoben sind, so dass sie, mit dem flachen Abschnitt (22) der entsprechenden seitlichen Oberfläche (21), gegen eine Querseite eines plattenförmigen Gegenstandes (P) anliegen können, der von der Fördereinrichtung (1) entlang der Bewegungsrichtung (T) zur Anschlagbarriere (2) hin bewegt wird.

4. Begradigungsvorrichtung (D) nach einem der vorhergehenden Ansprüche, umfassend, für jedes der Anschlagelemente (20) der Anschlagbarriere (2), Drehbegrenzungsmittel (3), die dafür vorgesehen und ausgelegt sind, die Winkeldrehung des Anschlagelements (20) um die entsprechende Drehachse (23) zu begrenzen.

5. Begradigungsvorrichtung (D) nach Anspruch 4, wobei die Drehbegrenzungsmittel (3) Torsionsfedern (32) umfassen, die auf den Anschlagelementen (20) koaxial zu den entsprechenden Drehachsen (23) montiert sind, um, während des Erwartens der Ankunft eines plattenförmigen Gegenstandes (P), die Anschlagelemente (20) in einer bestimmten Stellung zu halten, in der die flachen Abschnitte (22) ihrer entsprechenden seitlichen Oberflächen (21) der Fördereinrichtung (1) zugewandt sind, mit einer Neigung in Bezug auf die Bewegungsrichtung (T) des plattenförmigen Gegenstandes (P) zur Anschlagbarriere (2) hin.

6. Begradigungsvorrichtung (D) nach einem der vorhergehenden Ansprüche, wobei jedes Anschlagelement (20) der Anschlagbarriere (2) eine Verkleidungsschicht (25) umfasst, die aus einem Material mit stoßdämmenden Eigenschaften hergestellt ist und die an dem flachen Abschnitt (22) der entsprechenden seitlichen Oberfläche (21) angeordnet ist.

7. Begradigungsvorrichtung (D) nach einem der vorhergehenden Ansprüche, umfassend eine zweite Fördereinrichtung (4), die mit der Fördereinrichtung (1) verbunden ist und die dafür vorgesehen und ausgelegt ist, vertikal in Bezug auf die Fördereinrichtung (1) bewegbar zu sein, um in einer ersten Nichtbetriebskonfiguration angeordnet zu werden, in der sie in Bezug auf die Fördereinrichtung (1) abgesenkt ist, so dass die Fördereinrichtung (1) den plattenförmigen Gegenstand (P) entlang der Bewegungsrichtung (T) bewegen kann, und um in einer zweiten Betriebskonfiguration angeordnet zu werden, in der sie in Bezug auf die Fördereinrichtung (1) angehoben ist, so dass die zweite Fördereinrichtung (4) den plattenförmigen Gegenstand (P) bewegen kann, und wobei die zweite Fördereinrichtung (4) dafür ausgelegt ist, wenn sie in der zweiten Betriebskonfiguration angeordnet ist, den plattenförmigen Gegenstand (P) in einer zweiten Bewegungsrichtung (V), die orthogonal zur Bewegungsrichtung (T) ist, zu bewegen.

8. Begradigungsvorrichtung (D) nach Anspruch 7, wobei die Fördereinrichtung (1) eine Vielzahl von Bändern (10) umfasst, die zur Schleife geschlossen und parallel zueinander und voneinander beabstandet angeordnet sind, und wobei die zweite Fördereinrichtung (4) eine Vielzahl motorbetriebener Rollen (41) umfasst, die in den zwischen den Bändern (10) der Vielzahl von Bändern (10) vorhandenen Zwischenräumen angeordnet sind, wobei die entsprechenden Drehachsen parallel zueinander und parallel zu den Bändern (10), d. h. parallel zu der Bewegungsrichtung (T) angeordnet sind.

## Revendications

1. Un dispositif de redressement (D) permettant de redresser un article en forme de dalle (P), en particulier un carreau cru, par rapport à une direction de mouvement (T), comprenant :
un organe transporteur (1) ;
une barrière de butée (2) ;
où l'organe transporteur (1) est prédisposé et configuré pour recevoir un article en forme de dalle (P) et pour déplacer l'article en forme de dalle (P) le long d'une direction de mouvement (T) vers la barrière de butée (2),
où la barrière de butée (2) est constituée d'une pluralité d'éléments de butée (20) dont chacun est conformé afin que la surface latérale (21) correspondante ait au moins une portion plate (22), où les éléments de butée (20) sont montés fous de façon rotative sur des axes de rotation verticaux (23) correspondants qui sont disposés alignés le long d'une direction (Z) transversale et perpendiculaire à la direction de mouvement (T),
**caractérisé en ce que** les éléments de butée (20) sont montés sur les axes de rotation (23) de manière à ce que la portion plate (22) de leur surface latérale (21) soit essentiellement transversale à la direction de mouvement (T), et orientée vers l'article en forme de dalle (P) qui est transporté par l'organe transporteur (1) vers la barrière de butée (2), afin que les éléments de butée (20) rencontrent un côté transversal de l'article en forme de dalle (P) uniquement avec les portions plates (22) de leurs surfaces latérales (21) .

2. Le dispositif de redressement (D) selon la revendication 1, dans lequel la pluralité d'éléments de butée (20) de la barrière de butée (2) sont positionnés à proximité d'une extrémité de l'organe transporteur (1).

3. Le dispositif de redressement (D) selon l'une quelconque des revendications précédentes, dans lequel les éléments de butée (20) sont montés sur des axes de rotation (23) correspondants de manière à pouvoir être déplacés entre une position basse non opérationnelle, dans laquelle ils sont disposés abaissés par rapport à l'organe transporteur (1), et une position haute opérationnelle, dans laquelle ils sont soulevés par rapport à l'organe transporteur (1) de manière à pouvoir rencontrer, avec la portion plate (22) de la surface latérale (21) correspondante, un côté transversal d'un article en forme de dalle (P) déplacé par l'organe transporteur (1) le long de la direction de mouvement (T) vers la barrière de butée (2).

4. Le dispositif de redressement (D) selon l'une quelconque des revendications précédentes, comprenant, pour chacun des éléments de butée (20) de la barrière de butée (2), des moyens de limitation de la rotation (3) prédisposés et configurés pour limiter la rotation angulaire de l'élément de butée (20) par rapport à l'axe de rotation (23) respectif.

5. Le dispositif de redressement (D) selon la revendication 4, dans lequel les moyens de limitation de la rotation (3) comprennent des ressorts de torsion (32) qui sont montés sur les éléments de butée (20) coaxialement aux axes de rotation (23) correspondants de manière à maintenir, dans l'attente de l'arrivée d'un article en forme de dalle (P), les éléments de butée (20) dans une position donnée dans laquelle les portions plates (22) des surfaces latérales (21) correspondantes sont orientées vers l'organe transporteur (1) avec une inclinaison par rapport à la direction de mouvement (T) de l'article en forme de dalle (P) vers la barrière de butée (2).

6. Le dispositif de redressement (D) selon l'une quelconque des revendications précédentes, dans lequel chaque élément de butée (20) de la barrière de butée (2) comprend une couche de revêtement (25), réalisée dans un matériau ayant des caractéristiques d'absorption des chocs, positionnée au niveau de la portion plate (22) de la surface latérale (21) correspondante.

7. Le dispositif de redressement (D) selon l'une quelconque des revendications précédentes, comprenant un deuxième organe transporteur (4), associé à l'organe transporteur (1), prédisposé et configuré de manière à pouvoir être déplacé verticalement par rapport à l'organe transporteur (1) et de manière à être positionné dans une première configuration non opérationnelle, dans laquelle il est abaissé par rapport à l'organe transporteur (1) afin que l'organe transporteur (1) puisse déplacer l'article en forme de dalle (P) le long de la direction de mouvement (T), et dans une deuxième configuration opérationnelle dans laquelle il est soulevé par rapport à l'organe transporteur (1) afin que le deuxième organe transporteur (4) puisse déplacer l'article en forme de dalle (P), et dans lequel le deuxième organe transporteur (4) est configuré, lorsqu'il est positionné dans la deuxième configuration opérationnelle, pour déplacer l'article en forme de dalle (P) dans une deuxième direction de mouvement (V) perpendiculaire à la direction de mouvement (T).

8. Le dispositif de redressement (D) selon la revendication 7, dans lequel l'organe transporteur (1) comprend une pluralité de courroies (10) fermées en boucle et disposées parallèles entre elles et réciproquement espacées, et dans lequel le deuxième organe transporteur (4) comprend une pluralité de rouleaux motorisés (41), disposés dans les espaces existant entre les courroies (10) de la pluralité de courroies (10) avec les axes de rotation correspondants parallèles entre eux et parallèles aux courroies (10), c.-à-d. parallèles à la direction de mouvement (T).
